# EUROPEAN PATENT SPECIFICATION

(11) **EP 0 556 915 B1**
(45) Date of publication and mention of the grant of the patent: **27.12.1996**
(21) Application number: 93200431.0
(22) Date of filing: 15.02.1993
(51) Int. Cl.: C08F 8/00, C08F 8/32

(54) **Polymeric dispersants**
Polymer-Dispergiermittel
Dispersants polymères

(30) Priority: 19.02.1992 EP 92301379
(43) Date of publication of application: 25.08.1993
(73) Proprietor: SHELL INTERNATIONALE RESEARCH MAATSCHAPPIJ B.V., 2596 HR Den Haag (NL)
(72) Inventor: van Zon, Arie, NL-1031 CM Amsterdam (NL); Drent, Eit, NL-1031 CM Amsterdam (NL); van Asselen, Otto Leonardus Johannes, NL-1031 CM Amsterdam (NL)

(56) References cited:
- EP-A- 0 148 592
- EP-A- 0 382 405
- EP-A- 0 457 386
- US-A- 4 657 984

## Description

The present invention relates to certain polyolefin-derived copolymers, a process for their preparation, and lubricating oil and fuel compositions containing them.

The functionalisation of olefinic compounds with amines under syngas conditions is already known in the art. Thus, for example, in U.S. Patent No. 4,526,936, there is disclosed a method for forming polymeric products having a hydrocarbon backbone and a high degree of alkylene alkylamine pendant groups by contacting, in a liquid media, a polymer having unsaturated groups therein, a primary or secondary amine, carbon monoxide and hydrogen gas in the presence of a Group VIII metal containing compound. The formed product is useful for a variety of applications, for example, as a surfactant, a flocculating agent, softener and as a component in coating compositions.

EP-A-457,386 (Applicant's ref: T 412 EPC) discloses a process for the preparation of an organic compound having at least one secondary amine group, which process comprises reacting ammonia or a primary amine with carbon monoxide, a hydrogen source and an olefinically unsaturated compound, preferably containing from 2 to 30 carbon atoms e.g. 1-octene, diisobutylene, oleic acid, 10-undecenoic acid, 1,5-hexadiene and 1,7-octadiene, in the presence of a catalyst system comprising a source of cationic ruthenium, an aromatic N-heterocyclic ligand and a source of an anion other than a halide.

European Patent Application No. 92203389.9 filed 4th November, 1992 claiming priority from European Patent Application No. 91310314.9 filed 7th November, 1991 (Applicant's ref: T 5393 EPC) describes a process for the preparation of a secondary amine which comprises reacting carbon monoxide, hydrogen, a polyolefin and a primary amine derivative having a terminal -NH₂ group and a terminal -NR¹R² group, wherein each of R¹ and R² independently represents a hydrogen atom or an alkyl group; in the presence of a suitable solvent and a catalyst system comprising a source of cationic rhodium; optionally a source of cationic ruthenium; an aromatic N-heterocyclic ligand and a source of an anion other than a halide. The formed product is useful as a dispersant additive in lubricating oil and fuel compositions.

It has now surprisingly been found possible to use syngas conditions to prepare high molecular weight compounds having useful dispersancy properties in lubricating oil and fuel compositions.

Therefore, in accordance with the present invention there is provided a polyolefin-derived copolymer obtainable by a process which comprises reacting:
(i) a mixture of (a) a polyolefin having some olefinic unsaturation or succinic anhydride derivative thereof, and (b) a polyamine having terminal -NH₂ groups, or
(ii) the reaction product of (a) and (b);
with carbon monoxide, hydrogen and a diene; in the presence of a suitable solvent and a catalyst system comprising a source of cationic rhodium; optionally a source of cationic ruthenium; an aromatic N-heterocyclic ligand; and a source of an anion other than a halide.

Polyolefin-derived copolymers obtained by the process described in European Patent Application No. 91310314.9 discussed above when modified to include a diene as a further reagent form an aspect of the present invention.

The polyolefin may be partially hydrogenated, but it is important that there is some residual olefinic unsaturation in the polyolefin. The polyolefin has a number average molecular weight (Mₙ) preferably in the range from 200 to 100,000, more preferably from 200 to 5,000, and especially from 500 to 2,500.

The polyolefins are polymers and oligomers derived from olefin monomers, preferably monomers containing from 2 to 30, more preferably 2 to 6 carbon atoms, such as atactic polypropylene which may be conveniently prepared by a process analogous to the process of Comparative Example 1 of EP-A-268 214, or, more generally, to the process described in EP-A-69 951; partially hydrogenated polyisoprene which may be conveniently prepared by a process analogous to Example 1(a) of GB-A-1 575 507 with partial hydrogenation of the resulting polymer in accordance with Example 1(c); polyisobutylene; and polyalphaolefins, that is, partially hydrogenated oligomers, primarily trimers, tetramers and pentamers, of alphaolefin monomers containing generally from 6 to 12, more usually 8 to 12, carbon atoms, which may be prepared by a process as outlined in Hydrocarbon Processing, Feb. 1982, page 75 et seq.

Polyisobutylenes such as those sold by the British Petroleum Company under the Trade Marks "Ultravis", "Hyvis" and "Napvis" are particularly preferred for use in the present invention, e.g. "Ultravis 10", "Ultravis 30", "Hyvis 10", "Hyvis 30", "Hyvis 150" and "Napvis 10" polyisobutylenes having respectively a number average molecular weight (Mₙ) of 970*, 1300*, 1025*, 1320, 2400 and 971*, the Mₙ values marked with an asterisk having been determined by gel permeation chromatography and the unmarked ones by quantitative reaction with ozone.

The preparation of the succinic anhydride derivative of the polyolefin is known in the art. The derivative may conveniently be prepared by mixing the polyolefin, for example polyisobutylene, with maleic acid or maleic anhydride and passing chlorine through the mixture, yielding hydrochloric acid and polyolefin-substituted succinic anhydride, e.g. as described in UK Patent Specification No. 949,981. Alternatively, the derivative may be prepared by reacting thermally the polyolefin with maleic anhydride, e.g. as described in UK Patent Specification No. 1,483,729.

The polyamine may consist of carbon, hydrogen and nitrogen atoms or it may additionally contain oxygen and/or sulphur atoms. For example, the polyamine may be a compound of the general formula: 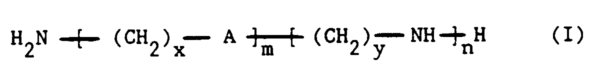 wherein each x is in the range 1 to 3, each y is in the range 1 to 3, each A independently represents -O- or -S-, m is 0, 1 or 2 and n is in the range 1 to 10, and wherein when m is 1, n is 1 and A is -O- or -S- or n is 2 and A is -S-, and when m is 2, n is 1.

The preferred polyamines of formula I above are those wherein y is 2, m is 0 and n is in the range 2 to 6.

The polyamine may be a single compound of formula I or mixture of two or more compounds of formula I.

Examples of polyamines of formula I above include diethylene triamine, triethylene tetramine, tetraethylene pentamine and pentaethylene hexamine which may be obtained from the Aldrich Chemical Company Ltd., (UK); hexaethylene heptamine which may be obtained from Union Carbide Corporation (USA); H₂N-C₂H₄-S-C₂H₄-NH-C₂H₄-NH₂ (see US Patent No. 3,362,996); and H₂N-(C₂H₄-O)ₚ-C₂H₄-NH₂ (p=1,2) and H₂N-(C₂H₄-S)_{q}-C₂H₄-NH₂ (q=1,2) which are listed in Beilsteins Handbuch der Organischen Chemie (Springer-Verlag, Hamburg, Viertes Erganzungswerke).

The polyamines of formula I above may be prepared by the methods of H.R. Ing and R.H.F. Manske, J. Chem. Soc., 1926, p. 2348 et seq.; G.D. Jones, A. Langsjoen, M.M.C. Neumann and J. Zomlefer, J. Org. Chem., 1944, 9, pp 125-147; Kirk-Othmer Encyclopedia of Chemical Technology, Volume 7 (Wiley Interscience, New York, 3rd edition, 1979) pp 580-602; S. Gabriel, Berichte, 1891, 24, pp 1110-1121; F.P.J. Dwyer and F. Lions, J. Am. Chem. Soc., 1950, 72, pp 1545-1550; F.P.J. Dwyer, N.S. Gill, E.C. Gyarfas and F. Lions, J. Am. Chem. Soc., 1953, 75, pp 1526-1528; US Patent No. 3,362,996; or by processes analogous thereto.

When (a) is a polyolefin and (b) is a polyamine, the reaction product of (a) and (b) may conveniently be prepared by halogenating the polyolefin and then reacting the halogenated polyolefin with the polyamine, preferably at elevated temperature in the presence of a solvent; particularly a solvent having a boiling point of at least 160°C, e.g. as described in U.S. Patents Nos. 3,275,554; 3,438,757; 3,565,804; 3,574,576; 3,898,056; 3,960,515 and 4,022,589.

Furthermore, when (a) is a polyolefin and (b) is a polyamine, the reaction product of (a) and (b) may also conveniently be prepared by heating these reactants with carbon monoxide and hydrogen gases, preferably at a temperature from 110 to 180°C, in the presence of a solvent and a rhodium- and, optionally, ruthenium-containing catalyst, e.g. as described in European Patent Application No. 91310314.9 (Applicant's ref: T 5393 EPC).

Alternatively, when (a) is a polyolefin- substituted succinic anhydride and (b) is a polyamine, the reaction product of (a) and (b) may conveniently be prepared by heating these reactants together, suitably at temperatures of at least 80°C, e.g. from 100 to 300°C, and preferably between 125 to 250°C, e.g. as described in U.S. Patent No. 4,873,004.

The preferred copolymers of the present invention are those obtained from using the reaction product of a polyolefin-substituted succinic anhydride and a polyamine.

The diene may be an alkadiene or a cycloalkadiene. An alkadiene may contain terminal and/or internal olefinic bonds. Preferably, both olefinic bonds in the alkadiene are terminal olefinic bonds, i.e. the alkadiene is an alpha, omega alkadiene.

The diene preferably contains from 4 to 20, especially 6 to 10, carbon atoms.

Particularly preferred dienes are C₆-C₈ alpha, omega alkadienes e.g. 1,5-hexadiene and 1,7-octadiene.

A source of cationic rhodium or, if present, ruthenium may be any material comprising rhodium or ruthenium which is capable of yielding cationic rhodium or ruthenium species. Examples of suitable sources include compounds of rhodium or ruthenium such as oxides; salts such as nitrates, sulphates, sulphonates (e.g. trifluoromethanesulphonates or p-toluenesulphonates), borates (e.g. tetrafluoroborates) phosphates, phosphonates (e.g. benzenephosphonates), carboxylates (e.g. acetates, propionates or butyrates), and acetylacetonates (e.g. Rh(CO)₂(acac) or Ru(acac)₃ where acac denotes an acetylacetonate anion); carbonyls (e.g. triruthenium dodecacarbonyl) and hydrides (e.g. HRh(CO)(Ph₃P)₃, H₂Ru₄(CO)₁₃, or H₄Ru₄(CO)₁₂).

The aromatic N-heterocyclic ligand used in the process of the present invention may be monodentate, or multidentate containing a plurality of coordinative N-ring atoms. Preferably it is a bidentate ligand containing two coordinative nitrogen atoms. It will be appreciated that the ligand should be inert.

The expression "aromatic N-heterocyclic ligand" as used herein indicates an organic ring compound containing at least one imino N-ring atom and a plurality of double bonds in the ring structure, such that the electron density is at least partially delocalised. The ring may be five-, six- or seven-membered, and may contain, besides carbon and nitrogen atoms, other hetero atoms such as oxygen or sulphur. Two aromatic N-heterocyclic rings may be linked together to form a bidentate ligand such as in 2,2'-bipyridine or 1,10-phenanthroline.

Preferably the aromatic N-heterocyclic ligand is a pyridine, a quinoline, a 2,2'-bipyridine, or a 1,10-phenanthroline.

Examples of aromatic N-heterocyclic ligands are pyridines, e.g. pyridine, 3-methylpyridine, 4-methylpyridine, 2,6-dimethylpyridine, 4-ethylpyridine, 2-methoxypyridine, 2-dimethylaminomethylpyridine, 2-pyridinecarboxylic acid; quinolines, e.g. quinoline or 2-methylquinoline; 2,2'-bipyridines, e.g. 2,2'-bipyridine, 4,4'-di-t-butyl-2,2'-bipyridine, 4,4'-diphenyl-2,2'-bipyridine, 4,4'-dicarboxyl-2,2'-bipyridine, 3,3'-dimethyl-2,2'-bipyridine, 4,4'-dimethyl-2,2'-bipyridine, 5,5'-dimethyl-2,2'-bipyridine or 6,6'-dimethyl-2,2'-bipyridine; 1,10-phenanthrolines, e.g. 1,10-phenanthroline, 4,7-dimethyl-1,10-phenanthroline, 3,4,7,8-tetramethyl-1,10-phenanthroline, 4,7-diphenyl-1,10-phenanthroline, or 3,4,5,6,7,8-hexamethyl-1,10-phenanthroline. Further suitable ligands include 2-(2-pyridyl)benzimidazole, 3-(2-pyridyl)-5,6-diphenyl-1,2,4-triazine, the monosodium salt of 3-(2-pyridyl)-5,6-diphenyl-1,2,4-triazine-p,p'-disulphonic acid and the disodium salt of 4,4'-dicarboxyl-2,2'-bipyridine.

2,2'-Bipyridine is a particularly preferred ligand.

The source of an anion other than a halide may be a salt or an acid. It may also be a metal complex, for example a rhodium or ruthenium complex. The anion is preferably a nitrate, sulphate, sulphonate, borate, phosphate, phosphonate, carboxylate or acetylacetonate anion. Preferably the source of anion is a complex or salt of rhodium or ruthenium, or an acid.

The number of moles of aromatic N-heterocyclic ligand per gram atom of rhodium is preferably in the range from 0.5 to 1000, more preferably from 0.75 to 50, and especially from 1 to 10.

The number of moles of anion per gram atom of rhodium is preferably at least 0.5, more preferably in the range from 1 to 100, and especially from 2 to 50.

The number of gram atoms of rhodium used per mole of polyolefin-containing reagent is not critical. It is preferably in the range from 10⁻⁶ to 10² gram atoms rhodium per mole of polyolefin-containing reagent.

The ratio of the number of gram atoms of rhodium to ruthenium preferably ranges from 100:1 to 1:100, more preferably from 100:1 to 1:10, and especially from 10:1 to 1:1.

The CO to H₂ ratio preferably ranges from 1:10 to 10:1, more preferably from 1:5 to 5:1.

The number of moles of diene used is less than or equal to the number of moles of polyolefin-containing reagent used. The molar ratio of diene to polyolefin-containing reagent is preferably in the range from 1:1 to 1:20, more preferably from 1:1 to 1:10.

The solvents which may conveniently be used include ethers such as diethyleneglycol dimethylether (diglyme), 1,4-dioxane or tetrahydrofuran; amides such as dimethylformamide or dimethylacetamide; alcohols such as hexanol or tetraethylene glycol; esters such as ethyl acetate; and hydrocarbons such as hexane, cyclohexane, toluene and the xylenes.

The present invention further provides a process for preparing a polyolefin-derived copolymer as described herein which comprises reacting:
(i) a mixture of (a) a polyolefin having some olefinic unsaturation or succinic anhydride derivative thereof, and (b) a polyamine having terminal -NH₂ groups, or
(ii) the reaction product of (a) and (b);
with carbon monoxide, hydrogen and a diene; in the presence of a suitable solvent and a catalyst system comprising a source of cationic rhodium; optionally a source of cationic ruthenium; an aromatic N-heterocyclic ligand; and a source of an anion other than a halide.

The process according to the invention is conveniently carried out at a temperature in the range of from 80 to 250°C, preferably from 100 to 200°C, and especially from 110 to 180°C, advantageously 160 to 170°C.

The present process is conveniently carried out at a total pressure as determined at ambient temperature (20°C) of from 200 to 25,000 kPa, preferably from 2,000 to 20,000 kPa, and especially from 2,000 to 6,000 kPa. It will be appreciated, however, that when the process is operated batchwise at a constant temperature, the pressure will fall during the course of reaction.

The polyolefin-derived copolymers according to the present invention may be used as dispersant additives in lubricating oils. Accordingly, the present invention further provides a lubricating oil composition comprising a major amount of a lubricating oil and a minor amount, preferably from 0.1 to 10%w, especially from 0.5 to 5%w, (based on the total composition) of a polyolefin-derived copolymer as herein described.

Suitable lubricating oils are natural, mineral or synthetic lubricating oils.

Natural lubricating oils include animal and vegetable oils, such as castor oil. Mineral oils comprise the lubricating oil fractions derived from crude oils, coal or shale, which fractions may have been subjected to certain treatments such as clay-acid, solvent or hydrogenation treatments. Synthetic lubricating oils include synthetic polymers of hydrocarbons, modified alkylene oxide polymers, and ester lubricants, which are known in the art. These lubricating oils are preferably crankcase lubricating oils for spark-ignition and compression-ignition engines, but include also hydraulic lubricants, metal-working fluids and automatic transmission fluids.

The lubricating compositions according to the present invention may contain various other additives known in the art, such as viscosity index improvers, e.g. linear or star-shaped polymers of a diene such as isoprene or butadiene, or a copolymer of such a diene with optionally substituted styrene. These copolymers are suitably block copolymers and are preferably hydrogenated to such an extent as to saturate most of the olefinic unsaturation. Other suitable additives include dispersant V.I. improvers such as those based on block copolymers, or polymethacrylates, extreme pressure/anti-wear additives such as zinc or sodium dithiophosphates, ashless dispersants such as polyolefin-substituted succinimides, e.g. those described in GB-A-2 231 873, anti-oxidants, friction modifiers or metal-containing detergents such as phenates, sulphonates, alkylsalicylates or naphthenates, all of which detergents may be overbased.

The polyolefin-derived copolymers according to the present invention may also be used as dispersant additives in fuels. Accordingly, the present invention further provides a fuel composition comprising a major amount of a fuel and a minor amount, preferably from 0.1 to 10%w, especially from 0.5 to 5%w, (based on the total composition) of a polyolefin-derived copolymer as herein described.

Suitable fuels include hydrocarbon base fuels boiling essentially in the gasoline boiling range from 30 to 230^{o}C. These base fuels may comprise mixtures of saturated, olefinic and aromatic hydrocarbons. They can be derived from straight-run gasoline, synthetically produced aromatic hydrocarbon mixtures, thermally or catalytically cracked hydrocarbon feedstocks, hydrocracked petroleum fractions or catalytically reformed hydrocarbons.

The lubricating oil or fuel compositions according to the present invention may conveniently be prepared by blending an additives concentrate into the lubricating base oil or fuel. Such a concentrate generally comprises an inert carrier fluid and one or more additives in a concentrated form. In the preparation of the lubricating oil compositions according to the invention, the concentrate conveniently contains a lubricating oil as inert carrier fluid, whilst in the preparation of the fuel compositions according to the invention, the concentrate conveniently contains a fuel as inert carrier fluid. Hence the present invention further provides an additive concentrate comprising an inert carrier fluid and from 10 to 80%w, based on the total concentrate, of a polyolefin-derived copolymer as herein described.

The invention will be further understood from the following illustrative examples in which "Hyvis 10" (Trade Mark) polyisobutylene, "SAP 220" and "SAP 285" were used. "Hyvis 10" polyisobutylene, which has a number average molecular weight, as determined by gel permeation chromatography, of 1025 is sold by The British Petroleum Company. "SAP 220" and "SAP 285" are both polyisobutylene-derived bis-succinimide ashless dispersants having viscosities at 40°C of 3731 and 28699 mm²/s respectively which are available from member companies of the Royal Dutch/Shell Group.

### Example 1

### (i) Preparation of reaction product of polyolefin (a) and polyamine (b)

510mmol "Hyvis 10" polyisobutylene (a) were introduced into a 21 "Hastelloy C" (Trade Mark) metal autoclave together with 275mmol diethylene triamine (b), 500ml diethyleneglycol dimethylether and, as catalyst, 1.0mmol Ru(acac)₃/2.0mmol Rh(CO)₂(acac)/12.0mmol 2,2'-bipyridine (acac denotes an acetylacetonate anion). The autoclave was then pressurised with a mixture of carbon monoxide and hydrogen (P_{CO}=3000 kPa, P_{hydrogen}=3000 kPa as determined at ambient temperature (20°C)) and the contents of the autoclave heated, with stirring, at 170°C for a period of 21 hours. The autoclave was then allowed to cool, the CO/H₂ pressure was released and further (220mmol) diethylene triamine (b) was introduced into the autoclave. The original carbon monoxide and hydrogen partial pressures were restored and the contents of the autoclave heated, with stirring, at 170°C for a further 43 hours. After cooling, a product-containing phase was separated from a solvent-containing phase. The former was then added to n-heptane (product/n-heptane ratio of 1/4) and the resulting mixture was washed seven times with 100ml portions of water (using a spark ignitor to effect phase separation) and then dried over anhydrous magnesium sulphate. Evaporation of the n-heptane under reduced pressure yielded the reaction product which was subsequently analysed for active matter and for basic-N and tertiary-N contents and its viscosity at 40°C was measured.

| Results | |
|---|---|
| Active matter (%w) | 63 |
| Basic-N (%N) | 1.38 |
| Tertiary-N (%N) | 0.57 |
| Viscosity at 40°C (mm²/s) | 14043 |

### (ii) Preparation of copolymer

40.8g of the reaction product obtained in step (i) above were introduced into a 250ml "Hastelloy C" metal autoclave together with 8.6mmol 1,5-hexadiene, 50ml tetrahydrofuran and, as catalyst, 0.1mmol Ru(acac)₃/0.2mmol Rh(CO)₂(acac)/1.2mmol 2,2'-bipyridine (acac denotes an acetylacetonate anion). The autoclave was then pressurised with a mixture of carbon monoxide and hydrogen (P_{CO}=3000 kPa, P_{hydrogen}=3000 kPa as determined at ambient temperature (20°C)) and the contents of the autoclave heated, with stirring, at 160°c for a period of 24 hours. After cooling, a product-containing phase was separated from a solvent-containing phase. The former was then added to n-heptane (product/n-heptane ratio of 1/5) and the resulting mixture was washed seven times with 25ml portions of water (using a spark ignitor to effect phase separation) and then dried over anhydrous magnesium sulphate. Evaporation of the n-heptane under reduced pressure yielded a copolymer which was subsequently analysed for active matter and for basic-N and tertiary-N contents and its viscosity at 40°C was measured.

| Results | |
|---|---|
| Active matter (%w) | 55 |
| Basic-N (%N) | 1.46 |
| Tertiary-N (%N) | 0.39 |
| Viscosity at 40°C (mm²/s) | 15980 |

### Example 2

The procedure described in step (ii) of Example 1 was repeated except that 40.6g of the reaction product obtained in step (i) and 6.0mmol 1,5-hexadiene were used, 50ml diethyleneglycol dimethylether was substituted for 50ml tetrahydrofuran, and the reaction temperature was raised to 170°C.

| Results | |
|---|---|
| Active matter (%w) | 70.5 |
| Basic-N (%N) | 1.20 |
| Tertiary-N (%N) | 0.84 |
| Viscosity at 40°C (mm²/s) | 23426 |

### Example 3

The procedure described in step (ii) of Example 1 was repeated except that 54g "SAP 220", 7mmol 1,7-octadiene and 50ml diethyleneglycol dimethylether were substituted for, respectively, 40.8g reaction product of step (i), 8.6mmol 1,5-hexadiene and 50ml tetrahydrofuran; and the reaction temperature was raised to 170°C.

| Results | |
|---|---|
| Basic-N (%N) | 1.58 |
| Viscosity at 40°C (mm²/s) | 6324 |

### Example 4

The procedure described in step (ii) of Example 1 was repeated except that 22mmol "SAP 285", 10mmol 1,7-octadiene and 50ml diethyleneglycol dimethylether were substituted for, respectively, 40.8g reaction product of step (i), 8.6mmol 1,5-hexadiene and 50ml tetrahydrofuran; 0.06mmol Ru(acac)₃ (acac denotes an acetylacetonate anion) was used in the catalyst composition; the reaction temperature was increased to 165°C; and the reaction time decreased to 20 hours.

| Results | |
|---|---|
| Basic-N (%N) | 0.31 |
| Tertiary-N (%N) | 0.19 |
| Viscosity at 40°C (mm²/s) | 33221 |

### Example 5

45.7mmol "Hyvis 10" polyisobutylene were introduced into a 250ml "Hastelloy C" metal autoclave together with 25.6mmol diethylene triamine, 9mmol 1,5-hexadiene, 50ml diethyleneglycol dimethylether and, as catalyst, 0.1mmol Ru(acac)₃/0.2mmol Rh(CO)₂(acac)/1.2mmol 2,2'-bipyridine (acac denotes an acetylacetonate anion). The autoclave was then pressurised with a mixture of carbon monoxide and hydrogen (P_{CO}=3000 kPa, P_{hydrogen}= 3000 kPa as determined at ambient temperature (20°C)) and the contents of the autoclave heated, with stirring, at 170°C for a period of 24 hours. After cooling, a product-containing phase was separated from a solvent-containing phase. The former was then added to n-heptane (product/n-heptane ratio of 1/5) and the resulting mixture was washed seven times with 25ml portions of water (using a spark ignitor to effect phase separation) and then dried over anhydrous magnesium sulphate. Evaporation of the n-heptane under reduced pressure yielded a copolymer which was subsequently analysed for active matter and for basic-N and tertiary-N contents and its viscosity at 40°C was measured.

| Results | |
|---|---|
| Active matter (%w) | 69 |
| Basic-N (%N) | 1.25 |
| Tertiary-N (%N) | 0.87 |
| Viscosity at 40°C (mm²/s) | 20080 |

### Example 6

76mmol "Hyvis 10" polyisobutylene were introduced into a 250ml "Hastelloy C" metal autoclave together with 16mmol tetraethylene pentamine, 75ml diethyleneglycol dimethylether and, as catalyst, 0.04mmol Ru(acac)₃/0,15mmol Rh(CO)₂(acac)/0.6mmol 2,2'-bipyridine (acac denotes an acetylacetonate anion). The autoclave was then pressurised with a mixture of carbon monoxide and hydrogen (P_{CO}-2500 kPa, P_{hydrogen}=3500 kPa as determined at ambient temperature (20°C)) and the contents of the autoclave heated, with stirring, at 170°C for a period of 16 hours. The autoclave was then allowed to cool, the CO/H₂ pressure was released and 8mmol 1,7-octadiene were introduced into the autoclave. The original carbon monoxide and hydrogen partial pressures were restored and the contents of the autoclave heated, with stirring, at 170°C for a further 16 hours. After cooling, a product-containing phase was separated from a solvent-containing phase. The former was then added to n-heptane (product/n-heptane ratio of 1/5) and the resulting mixture was washed seven times with 25ml portions of water (using a spark ignitor to effect phase separation) and then dried over anhydrous magnesium sulphate. Evaporation of the n-heptane under reduced pressure yielded a copolymer which was subsequently analysed for active matter and for basic-N and tertiary-N contents and its viscosity at 40°C was measured.

| Results | |
|---|---|
| Active matter (%w) | 49 |
| Basic-N (%N) | 0.96 |
| Tertiary-N (%N) | 0.49 |
| Viscosity at 40°C (mm²/s) | 22815 |

### Example 7

### (i) Carbon Black Dispersancy Test (CBDT) (British Rail publication BR 669 : 1984)

Samples of a SAE 15W40 Middle East lubricating oil containing a commercial package of a zinc dialkyldithiophosphate, an overbased calcium alkyl salicylate and VI improver, were modified by incorporation of the copolymers of Examples 2 to 6 to give oils containing the copolymers at a concentration of 1%w active matter. 3%w of carbon black was then added to each oil and (percentage) increase in kinematic viscosity at 60°C was determined, using an Ubbelohde viscometer. A low result indicates good performance. (ii) Fluoroelastomer Seal Compatibility Test (FSCT)

The copolymers of Examples 3, 4 and 6 were incorporated in lubricating oils to give concentrations of 1.5%w active matter (copolymer) and tested for compatibility with fluoroelastomer seal materials according to the method of DIN 53504 and, specifically, Daimler Benz specification DB 6615. Percentage reduction in tensile strength (TS) and elongation at break (EB) were assessed.

For the purposes of comparison, similar evaluations were carried out on "SAP 220", at the same active matter concentrations.

Results of these tests are given in Table I following:

**TABLE I**

| Copolymer of Example | FSCT | | |
|---|---|---|---|
| | CBDT (%) | TS % | EB (%) |
| 2 | 53 | - | - |
| 3 | 31 | 9 | 6 |
| 4 | 21 | 9 | 5 |
| 5 | 46 | - | - |
| 6 | 49 | 42 | 36 |
| "SAP 220" | 32 | 32 | 30 |

## Claims

1. A polyolefin-derived copolymer obtainable by a process which comprises reacting:
(i) a mixture of (a) a polyolefin having some olefinic unsaturation or succinic anhydride derivative thereof, and (b) a polyamine having terminal -NH₂ groups, or
(ii) the reaction product of (a) and (b);
with carbon monoxide, hydrogen and a diene; in the presence of a suitable solvent and a catalyst system comprising a source of cationic rhodium; optionally a source of cationic ruthenium; an aromatic N-heterocyclic ligand; and a source of an anion other than a halide.

2. A copolymer according to claim 1, wherein the polyolefin is derived from C₂-C₆ olefin monomers.

3. A copolymer according to claim 1 or claim 2, wherein the polyamine is a compound of the general formula:
H₂N-[-(CH₂)ₓ-A-]ₘ-[CH₂)_{y}-NH-]-ₙ H (I)
wherein each x is in the range 1 to 3, each y is in the range 1 to 3, each A independently represents -0- or -S-, m is 0, 1 or 2 and n is in the range 1 to 10, and wherein when m is 1, n is 1 and A is -O- or -S- or n is 2 and A is -S-, and when m is 2, n is 1.

4. A copolymer according to any one of claims 1 to 3, wherein the diene contains from 4 to 20 carbon atoms.

5. A copolymer according to any one of the preceding claims, wherein the source of cationic rhodium or ruthenium is an oxide, salt, hydride or carbonyl.

6. A copolymer according to any one of the preceding claims, wherein the aromatic N-heterocyclic ligand is a pyridine, a quinoline, a 2,2'-bipyridine, or a 1,10-phenanthroline.

7. A copolymer according to any one of the preceding claims, wherein the anion is a nitrate, sulphate, sulphonate, borate, phosphate, phosphonate, carboxylate or acetylacetonate anion.

8. A process for preparing a polyolefin-derived copolymer as claimed in any one of claims 1 to 7 which comprises reacting:
(i) a mixture of (a) a polyolefin having some olefinic unsaturation or succinic anhydride derivative thereof, and (b) a polyamine having terminal -NH₂ groups, or
(ii) the reaction product of (a) and (b);
with carbon monoxide, hydrogen and a diene; in the presence of a suitable solvent and a catalyst system comprising a source of cationic rhodium; optionally a source of cationic ruthenium; an aromatic N-heterocyclic ligand; and a source of an anion other than a halide.

9. A lubricating oil composition comprising a major amount of a lubricating oil and a minor amount of a copolymer as claimed in any one of claims 1 to 7.

10. A fuel composition comprising a major amount of a fuel and a minor amount of a copolymer as claimed in any one of claims 1 to 7.

## Patentansprüche

1. Ein von einem Polyolefin abgeleitetes Copolymer, erhältlich nach einem Verfahren, welches ein Umsetzen von:
(i) einem Gemisch aus (a) einem Polyolefin, das eine gewisse olefinische Unsättigung aufweist, oder einem Bernsteinsäureanhydridderivat hievon und (b) einem Polyamin mit endständigen NH₂-Gruppen oder
(ii) dem Reaktionsprodukt aus (a) mit (b);
mit Kohlenmonoxid, Wasserstoff und einem Dien in Anwesenheit eines geeigneten Lösungsmittels und eines Katalysatorsystems umfaßt, das eine Quelle für kationisches Rhodium; gegebenenfalls eine Quelle für kationisches Ruthenium; einen aromatischen N-heterocyclischen Liganden; und eine Quelle für ein von einem Halogenid unterschiedliches Anion umfaßt.

2. Copolymer nach Anspruch 1, worin das Polyolefin von C₂-C₆-Olefinmonomeren abgeleitet ist.

3. Copolymer nach Anspruch 1 oder 2, worin das Polyamin eine Verbindung der allgemeinen Formel:
H₂N⁅(CH₂)ₓ-A-]ₘ⁅(CH₂)_{y}-NH⁆ₙH (I)
ist, worin jedes x im Bereich von 1 bis 3 liegt, jedes y im Bereich von 1 bis 3 liegt, jeder Rest A unabhängig für -O- oder-S- steht, m den Wert 0, 1 oder 2 hat und n im Bereich von 1 bis 10 liegt, und worin dann, wenn m für 1 steht, n den Wert 1 hat und A für -O- oder -S- steht, oder n den Wert 2 hat und A für-S- steht, und dann, wenn m den Wert 2 hat, n den Wert 1 aufweist.

4. Copolymer nach einem der Ansprüche 1 bis 3, worin das Dien 4 bis 20 Kohlenstoffatome enthält.

5. Copolymer nach einem der vorstehenden Ansprüche, worin die Quelle für kationisches Rhodium oder Ruthenium ein Oxid, Salz, Hydrid oder Carbonyl ist.

6. Copolymer nach einem der vorstehenden Ansprüche, worin der aromatische N-heterocyclische Ligand ein Pyridin, ein Chinolin, ein 2,2'-Bipyridin oder ein 1,10-Phenanthrolin ist.

7. Copolymer nach einem der vorstehenden Ansprüche, worin das Anion ein Nitrat-, Sulfat-, Sulfonat-, Borat-, Phosphat-, Phosphonat-, Carboxylat- oder Acetylacetonatanion ist.

8. Verfahren zur Herstellung eines von einem Polyolefin abgeleiteten Copolymers, wie in einem der Ansprüche 1 bis 7 beansprucht, welches ein Umsetzen von:
(i) einem Gemisch aus (a) einem Polyolefin, das eine gewisse olefinische Unsättigung aufweist, oder einem Bernsteinsäureanhydridderivat hievon und (b) einem Polyamin mit endständigen NH₂-Gruppen oder
(ii) dem Reaktionsprodukt aus (a) mit (b);
mit Kohlenmonoxid, Wasserstoff und einem Dien in Anwesenheit eines geeigneten Lösungsmittels und eines Katalysatorsystems umfaßt, das eine Quelle für kationisches Rhodium; gegebenenfalls eine Quelle für kationisches Ruthenium; einen aromatischen N-heterocyclischen Liganden; und eine Quelle für ein von einem Halogenid unterschiedliches Anion umfaßt.

9. Schmierölzusammensetzung, umfassend eine Hauptkomponente aus einem Schmieröl und eine Nebenkomponente aus einem Copolymer, wie in einem der Ansprüche 1 bis 7 beansprucht.

10. Treibstoffzusammensetzung, umfassend eine Hauptkomponente aus einem Treibstoff und eine Nebenkomponente aus einem Copolymer, wie in einem der Ansprüche 1 bis 7 beansprucht.

## Revendications

1. Polyoléfine, que l'on peut obtenir par un procédé caractérisé en ce que l'on fait réagir :
(i) un mélange (a) d'une polyoléfine comportant une certaine insaturation oléfinique ou d'un dérivé d'anhydride succinique de cette polyoléfine et (b) d'une polyamine possédant des radicaux -NH₂ terminaux ou bien
(ii) le produit de la réaction de (a) et de (b),
avec le monoxyde de carbone, l'hydrogène et un diène, en présence d'un solvant approprié et d'un système catalytique comprenant une source de rhodium cationique, éventuellement une source de ruthénium cationique, d'un ligand aromatique N-hétérocyclique et d'une source d'un anion autre qu'un halogénure.

2. Copolymère suivant la revendication 1, caractérisé en ce que la polyoléfine provient de monomères oléfiniques en C₂ à C₆.

3. Copolymère suivant la revendication 1 ou la revendication 2, caractérisé en ce que la polyamine est un composé de la formule générale : 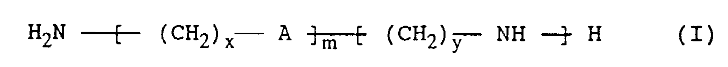 dans laquelle chaque x a une valeur qui varie de 1 à 3, chaque y a une valeur qui varie de 1 à 3, chaque symbole A représente, indépendamment, -O- ou -S-, m est égal à 0, 1 ou 2 et n varie de 1 à 10 et, lorsque m est égal à 1, n est égal à 1 et A est -O- ou -S-, ou bien lorsque n est égal à 2, A est -S- et lorsque m est égal à 2, n est égal à 1.

4. Copolymère suivant l'une quelconque des revendications 1 à 3, caractérisé en ce que le diène contient de 4 à 20 atomes de carbone.

5. Copolymère suivant l'une quelconque des revendications précédentes, caractérisé en ce que la source de ruthénium ou de rhodium cationique est un oxyde, un sel, un hydrure ou un carbonyle.

6. Copolymère suivant l'une quelconque des revendications précédentes, caractérisé en ce que le ligand aromatique N-hétérocyclique est une pyridine, une quinoléine, une 2,2'-bipyridine, ou une 1,10-phénanthroline.

7. Copolymère suivant l'une quelconque des revendications précédentes, caractérisé en ce que l'anion est un anion nitrate, sulfate, sulfonate, borate, phosphate, phosphonate, carboxylate, ou acétylacétonate.

8. Procédé de préparation d'un copolymère dérivé d'une polyoléfine suivant l'une quelconque des revendications 1 à 7, caractérisé en ce que l'on fait réagir :
(i) un mélange (a) d'une polyoléfine possédant une certaine insaturation oléfinique ou d'un dérivé d'anhydride succinique de celle-ci et (b) d'une polyamine possédant des radicaux -NH₂ terminaux, ou
(ii) le produit de la réaction de (a) et de (b),
avec le monoxyde de carbone, l'hydrogène et un diène, en présence d'un solvant approprié et d'un système catalytique comprenant une source de rhodium cationique, éventuellement une source de ruthénium cationique, d'un ligand aromatique N-hétérocyclique et d'une source d'un anion autre qu'un halogénure.

9. Composition d'huile lubrifiante qui comprend une proportion majeure d'une huile lubrifiante et une proportion mineure d'un copolymère suivant l'une quelconque des revendications 1 à 7.

10. Composition de carburant comprenant une proportion majeure d'un carburant et une proportion mineure d'un copolymère suivant l'une quelconque des revendications 1 à 7.
